(19) Europäisches Patentamt
European Patent Office
Office européen des brevets

(11) EP 4 648 314 A1

(12) EUROPEAN PATENT APPLICATION

(43) Date of publication:
12.11.2025 Bulletin 2025/46

(21) Application number: 25175270.5

(22) Date of filing: 09.05.2025

(51) International Patent Classification (IPC):
H04J 11/00 (2006.01)

(52) Cooperative Patent Classification (CPC):
H04J 11/005; H04L 27/26025

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 10.05.2024 KR 20240062195
16.07.2024 KR 20240094007

(71) Applicant: Samsung Electronics Co., Ltd.
Suwon-si, Gyeonggi-do 16677 (KR)

(72) Inventors:
• OH, Jinwoo
16677 Suwon-si (KR)
• KIM, Jinho
16677 Suwon-si (KR)
• PARK, Jungmin
16677 Suwon-si (KR)

(74) Representative: Marks & Clerk LLP
15 Fetter Lane
London EC4A 1BW (GB)

(54) **USER EQUIPMENT FOR REMOVING INTERFERENCE SIGNAL AND OPERATING METHOD THEREOF**

(57) Provided are a user equipment (UE) for removing an interference signal caused by an adjacent cell and an operating method of the UE. The operating method of the UE communicating with a base station (BS) includes calculating a frequency offset difference between a serving cell and an interference cell based on a first frequency offset for the serving cell and a second frequency offset for the interference cell, the frequency offset difference including a subcarrier offset and a residual frequency offset, the subcarrier offset being an integer multiple of a subcarrier spacing (SCS), and removing an interference signal from a reception signal received by the UE by compensating for the frequency offset difference based on the residual frequency offset.

FIG. 3

**Description**

BACKGROUND

The inventive concepts relate to wireless communication, and more particularly, to a user device (UE) for removing an interference signal caused by an adjacent cell and an operating method thereof.

Satellite communication systems have been developed as next-generation mobile communication systems to meet the explosively increasing demand for wireless data traffic due to the commercialization of existing terrestrial networks, such as long term evolution (LTE) communication systems or new radio (NR) communication systems, and the increase in multimedia services, and to overcome the limitations of the coverage of existing terrestrial networks.

Satellite communication systems may provide wider coverage, but may also be subject to significant interference due to the overlap of coverage between cells. In particular, because a base station (BS) transmits a cell-specific reference signal (CRS) over the entire bandwidth, CRS signal interference may occur between adjacent cells. The performance of a UE and the performance of a network deteriorate due to CRS signal interference between adjacent cells.

SUMMARY

The inventive concepts provide a user equipment (UE), which divides a frequency offset difference into a subcarrier offset and a residual frequency offset, and performs an interference signal removing operation of compensating for the frequency offset difference based on the residual frequency offset, and an operating method of the UE. Embodiments provide a UE for efficiently removing an interference signal caused by an adjacent cell and an operating method of the UE.

In addition, the inventive concepts are not limited to those described above, and the inventive concepts will be clearly understood from the following description by those of ordinary skill in the art.

According to an aspect of the inventive concepts, there is provided an operating method of a UE communicating with a base station (BS), the operating method including calculating a frequency offset difference between a serving cell and an interference cell based on a first frequency offset for the serving cell and a second frequency offset for the interference cell, the frequency offset difference including a subcarrier offset and a residual frequency offset, the subcarrier offset being an integer multiple of a subcarrier spacing (SCS), and removing an interference signal from a reception signal received by the UE by compensating for the frequency offset difference based on the residual frequency offset.

According to an aspect of the inventive concepts, there is provided an operating method of a UE communicating with a base BS, the operating method including detecting a first frequency offset for a serving cell provided by the BS and a second frequency offset for an interference cell, calculating a normalized frequency offset by normalizing a frequency offset difference at a subcarrier spacing (SCS), the frequency offset difference being a difference value between the first frequency offset and the second frequency offset, calculating a residual frequency offset and a subcarrier offset based on the normalized frequency offset, the subcarrier offset being an integer multiple of the SCS, determining whether an absolute value of the residual frequency offset is greater than or equal to a threshold value, performing a first interference signal removing operation of repeatedly compensating for the frequency offset difference on a reception signal received by the UE in response to determining the absolute value of the residual frequency offset is greater than or equal to the threshold value, determining whether there is an interference cell-specific reference signal (CRS) collision in response to determining the absolute value of the residual frequency offset is less than the threshold value, the CRS collision occurring based on a CRS position of the interference cell overlapping a CRS position of the serving cell, performing a second interference signal removing operation of repeatedly compensating for the subcarrier offset on the reception signal in response to determining the interference CRS collision exists, and performing a third interference signal removing operation of compensating for the subcarrier offset on the reception signal only once in response to determining the interference CRS collision does not exist.

According to an aspect of the inventive concepts, there is provided a UE communicating with a BS, the UE including processing circuitry configured to calculate a frequency offset difference between a serving cell and an interference cell based on a first frequency offset for the serving cell and a second frequency offset for the interference cell, the frequency offset difference including a subcarrier offset and a residual frequency offset, the serving cell being provided by the BS, and the subcarrier offset being an integer multiple of a subcarrier spacing (SCS), and perform an interference signal removing operation to remove an interference signal from a reception signal by compensating for the frequency offset difference based on the residual frequency offset, the interference signal being caused by the interference cell, and the reception signal being received by the UE.

The following features may apply to any of the above described aspects.

The operating method is a method performed by the user equipment (UE), wherein the UE is configured to communicate with the base station (BS). The serving cell may be a cell of the BS. The interference cell may be a cell of a further BS. The BS and the further BS may each be satellites.

In some embodiments, the removing the interference signal from the reception signal may comprise: selecting between a plurality of interference signal removing operations based at least on the residual frequency offset. The plurality of interference signal removing operations may comprise two or more of the first interference signal removing operation, the second interference signal removing operation or the third interference signal removing operation discussed herein.

In some embodiments, one or more of the plurality of interference signal removing operations (e.g. the first interference signal removing operation and the second interference signal removing operation) may comprise sequentially repeating operations until a convergence condition is satisfied.

The removing the interference signal may comprise removing the interference signal by performing a first interference signal removing operation for compensating for the frequency offset difference in which one or more operations are performed in order to restore the reception signal of the serving cell based on a serving CRS channel estimation. The first interference signal removing operation also comprises sequentially repeating the one or more operations based on the restored reception signal.

The removing the interference signal may comprise removing the interference signal by performing a second interference signal removing operation for compensating for the subcarrier offset in which one or more operations are performed in order to restore the reception signal of the serving cell based on a serving CRS channel estimation. The second interference signal removing operation also comprises sequentially repeating the one or more operations based on the restored reception signal.

The UE may receive, via one or more of the plurality of antennas, bandwidth information of the interference cell from the BS through one of radio resource control (RRC) signaling, medium access control-control element (MAC-CE) signaling or downlink control indicator (DCI) signaling. The bandwidth information may be received at the processing circuitry of the UE via one or more of the plurality of antennas.

At least some of the above and other features of the invention are set out in the claims.

BRIEF DESCRIPTION OF THE DRAWINGS

Brief descriptions of respective drawings are provided to gain a sufficient understanding of the drawings of the detailed description of the inventive concepts.

Embodiments will be more clearly understood from the following detailed description taken in conjunction with the accompanying drawings in which:

FIG. 1 is a block diagram illustrating a wireless communication system according to embodiments;
FIG. 2 is a diagram illustrating a basic structure of a time-frequency domain, which is a radio resource area, in the wireless communication system, according to embodiments;
FIG. 3 is a flowchart of an operating method of a user equipment (UE), according to embodiments;
FIG. 4 is a flowchart of an operating method of a UE, according to embodiments;
FIG. 5 is a flowchart of a first interference signal removing operation according to embodiments;
FIG. 6 is a flowchart of a second interference signal removing operation according to embodiments;
FIG. 7 is a flowchart of a third interference signal removing operation according to embodiments;
FIG. 8 is a flowchart of an operating method of a wireless communication system, according to embodiments;
FIG. 9 is a block diagram of a UE according to embodiments;
FIG. 10 is a block diagram of an electronic device according to embodiments; and
FIG. 11 is a conceptual diagram illustrating an Internet of things (IoT) network system to which embodiments are applied.

DETAILED DESCRIPTION

Although embodiments are described below based on a wireless communication system using a new radio (NR) network or a long term evolution (LTE) network, and in particular, 3rd generation partnership project (3GPP), the inventive concepts are not limited to the NR network or the LTE network. The inventive concepts may also be applied to other wireless communication systems having similar technical backgrounds or channel settings (e.g., cellular communication systems for next-generation communications such as LTE-advanced (LTE-A), wireless broadband (WiBro), global system for mobile communication (GSM), and/or 6th generation (6G), and/or short-range communication systems such as Bluetooth, near field communication (NFC)), etc.

In embodiments described below, hardware approaches are described as an example. However, because embodiments include technology using both hardware and software, embodiments do not exclude software-based approaches (e.g., using software and hardware).

Various functions described below may be implemented or supported by artificial intelligence technology or one or more computer programs, each of which may be implemented as computer-readable program code and may be executed on a non-transitory computer-readable recording medium. The terms "application" and "program" refer to one or more computer programs, software components, sets of instructions, procedures, functions, objects, classes, instances, associated data, or portions thereof suitable for implementation of appropriate computer-readable program code. The term "computer-readable program code" includes any type of computer code, including source code, object code, and executable code. The term "computer-readable recording medium" includes any type of memory that is accessible by a computer, such as read only memory (ROM), random access memory (RAM), a hard disk drive, a compact disk (CD), a digital video disk (DVD), or any other type of memory. The "non-transitory" computer-readable recording medium excludes wired, wireless, optical, or other communication links that transmit transient electrical or other signals. The non-transitory computer-readable recording medium includes a medium that allows data to be permanently stored and a medium that allows data to be stored and overwritten later, such as a rewritable optical disk or an erasable memory device.

Hereinafter, embodiments will be described in detail with reference to the accompanying drawings.

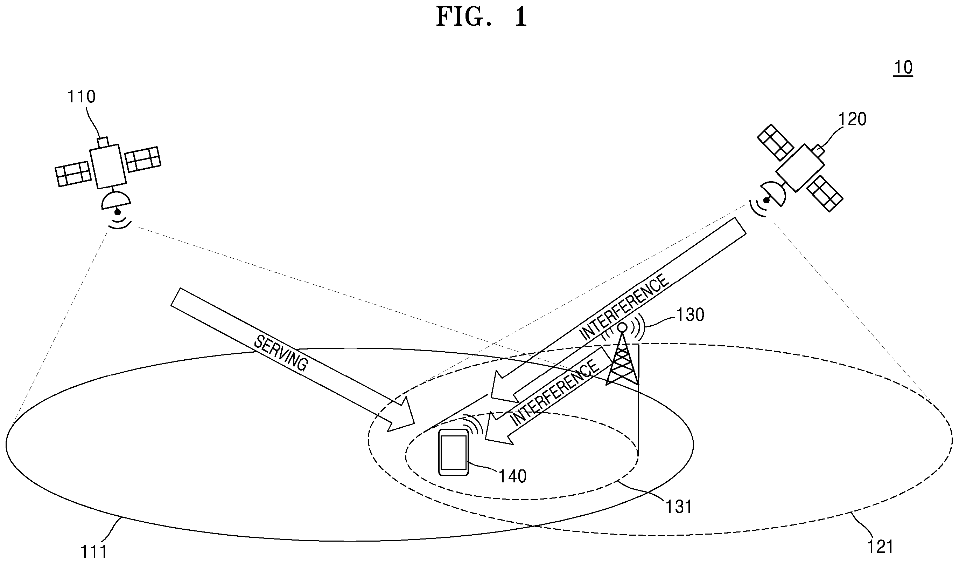

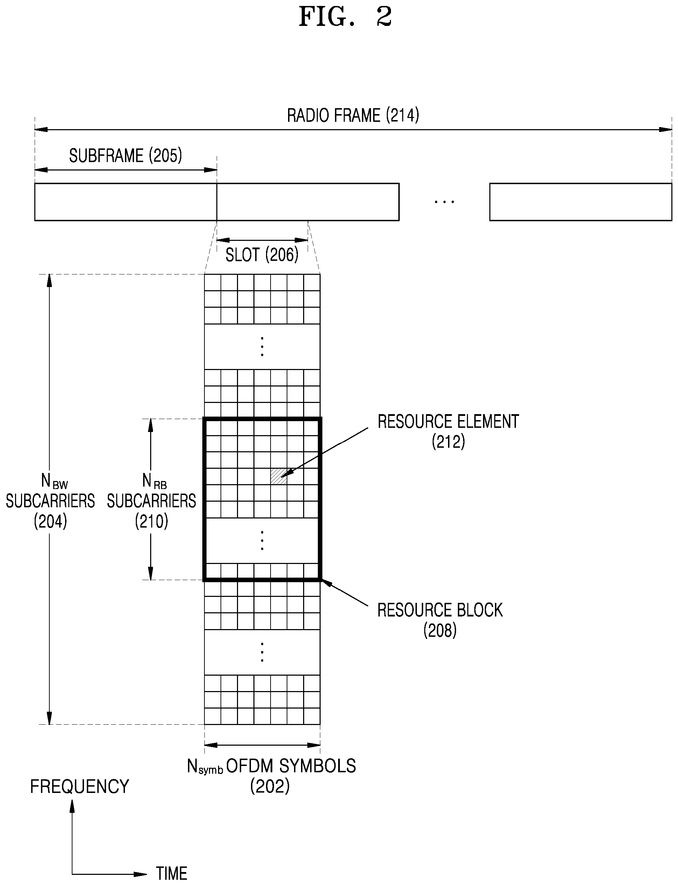

FIG. 1 is a block diagram illustrating a wireless communication system 10 according to embodiments. FIG. 2 is a diagram illustrating a basic structure of a time-frequency domain, which is a radio resource area, in the wireless communication system 10, according to embodiments.

Referring to FIG. 1, the wireless communication system 10 may include a base station (BS) 110, 120, and/or 130, and/or a user equipment (UE) 140. In the present specification, only the BS 110, 120 and/or 130, and the UE 140 are illustrated, but the inventive concepts are not limited thereto. For example, other UEs (not shown) may be further included, and only some of the BSs 110, 120, and/or 130 may be included or other BSs (not shown) may be further included.

The BS 110, 120, and/or 130 may refer to a fixed station that communicates with the UE 140 and/or another BS (not shown), or may refer to a mobile satellite (e.g., either a geostationary orbit (GEO) satellite or a low earth orbit (LEO) satellite) that communicates with the UE 140 and/or another BS (not shown). For example, the BSs 110 and 120 may support a non-terrestrial network and the BS 130 may support a terrestrial network.

The BS 110, 120 and/or 130 may exchange data and control information with the UE 140 and/or another BS while communicating with the UE 140 and/or the other BS (not shown). For example, the BS 110, 120, and/or 130 may be referred to as a serving cell, a cell, a Node B, an evolved-Node B (eNB), a next generation Node B (gNB), a sector, a site, a base transceiver system (BTS), an access point (AP), a relay node, a remote radio head (RRH), a radio unit (RU), a small cell, a device, etc. The BS 110, 120 and/or 130 may provide wireless broadband access to the UE 140 within a coverage 111, 131 and/or 121 thereof.

The UE 140 may refer to any device that is stationary or mobile and is capable of communicating with the BS 110, 120, and/or 130 to transmit and receive data and/or control information to and from the BS 110, 120, and/or 130. For example, the UE 140 may be referred to as a terminal, a terminal equipment, a mobile station (MS), a mobile terminal (MT), a user terminal (UT), a subscribe station (SS), a wireless communication device, a wireless device, a handheld device, or the like.

In embodiments, the UE 140 may initially connect to the BS 110 and perform wireless communication with the BS 110, and may be located in an area where the coverage 111 of the BS 110, the coverage 121 of the BS 120, and the coverage 131 of the BS 130 overlap. Because the coverages overlap, an interference signal may occur from a cell (e.g., the BS 120 and/or 130) adjacent to the BS 110. For example, a cell-specific reference signal (CRS) may be allocated to the entire resource block (RB) of the bandwidth. The UE 140 located at the edge of the coverage 111 of the BS 110 may receive a CRS from the cell (e.g., the BS 120 and/or 130) adjacent to the BS 110 as an interference signal, and the CRS received from the adjacent cell may be referred to as an interference CRS. Hereinafter, a cell that communicates with the UE 140 is referred to as a serving cell, and a cell that may affect a reception signal received by the UE 140 among the cells adjacent to the serving cell is referred to as an interference cell.

When an interference signal is generated due to an interference cell, the performance of the UE 140 or the performance of the wireless communication system 10 may deteriorate. In comparative examples, further enhanced inter-cell interference coordination (FeICIC) may be used to remove an interference signal. The FeICIC may refer to an interference signal removing method in which the BS 110 informs the UE 140 of the position of the interference CRS without transmitting data to the position of the interference CRS, so that the UE 140 may remove the interference CRS.

However, the FeICIC may be used when the frequency offset difference between the serving cell and the interference cell is relatively small (e.g., about 0.05 ppm). A BS that supports a non-terrestrial network (e.g., the BS 110 or 120) may move at a relatively high speed, and the frequency offset difference between the serving cell and the interference cell may relatively increase due to the Doppler shift.

For example, the BS 110 may move at a higher speed (e.g., 300 km/h), and the frequency offset difference between the serving cell (e.g., the BS 110) and the fixed interference cell (e.g., the BS 130) may be about 328 Hz due to the Doppler shift. For example, the frequency offset difference between the serving cell and the interference cell due to the Doppler shift may be greater than half the subcarrier spacing (SCS). The SCS may refer to a frequency interval of a constant magnitude between adjacent subcarriers. Accordingly, an interference signal may not be removed by using the FeICIC according to the comparative examples.

Referring to FIG. 2 for explaining the SCS, the horizontal axis may represent a time domain and the vertical axis may represent a frequency domain. A minimum (or smallest) transmission unit in the time domain is an orthogonal frequency division multiplexing (OFDM) symbol, and $N_{symb}$ OFDM symbols 202 may be gathered to configure one slot 206. Two slots may be gathered to configure one subframe 205. In embodiments, the length of the slot 206 may be 0.5 ms and the length of the subframe 205 may be 1.0 ms. However, this is only an example. The length of the slot 206 may vary depending on the configuration of the slot 206, and the number of slots 206 included in the subframe 205 may vary depending on the length of the slot 206. On the other hand, in an NR network, the time-frequency domain may be defined centered on the slot 206. In addition, a radio frame 214 may be the unit of the time domain including ten subframes 205.

A minimum (or smallest) transmission unit in the frequency domain is a subcarrier, and an entire system transmission bandwidth may be configured with a total of $N_{BW}$ subcarriers 204. The SCS may refer to a frequency interval of a constant magnitude between the $N_{BW}$ subcarriers 204. A basic unit of a resource in the time-frequency domain is a resource element (RE) 212, which may be represented by an OFDM symbol index and a subcarrier index. A resource block (RB) 208 may be defined as $N_{symb}$ consecutive OFDM symbols 202 in the time domain and $N_{RB}$ consecutive subcarriers 210 in the frequency domain. Therefore, one RB 208 may include $N_{symb}$* $N_{RB}$ REs 212. An RB pair is a unit of two RBs concatenated on the time domain and may include $N_{symb}$*2$N_{RB}$ REs 212.

Referring back to FIG. 1, the FeICIC according to the comparative examples may be used when the bandwidth of the serving cell is equal to the bandwidth of the interference cell. Because a BS that supports a non-terrestrial network (e.g., the BS 110 or 120) may use a relatively narrow bandwidth, the bandwidth of the serving cell may be different from the bandwidth of the interference cell.

For example, when the serving cell is the BS 110 and the interference cell is the BS 120, the bandwidth of the BS 110 may include $N_{BW}$ subcarriers 204 of FIG. 2, and the bandwidth of the BS 120 may include a smaller number of subcarriers than the $N_{BW}$ subcarriers 204 of FIG. 2. Accordingly, the bandwidth of the serving cell may be different from the bandwidth of the interference cell. Accordingly, an interference signal may not be removed by using the FeICIC according to the comparative examples.

To solve this, the wireless communication system 10 according to the inventive concepts may divide the frequency offset difference between the serving cell (e.g., the BS 110) and the interference cell (e.g., the BS 130) into a subcarrier offset and a residual frequency offset, and may perform an interference signal removing operation of compensating for the subcarrier or compensating for both the subcarrier offset and the residual frequency offset, based on the residual frequency offset. The subcarrier offset has a value corresponding to an integer multiple of the SCS. Accordingly, even when the frequency offset difference between the serving cell and the interference cell is relatively large, the interference signal caused by the interference cell may be efficiently removed and the performance of the wireless communication system 10 may be improved.

In addition, the UE 140 according to the inventive concepts may obtain bandwidth information of the interference cell (e.g., the BS 120) through signaling with the serving cell (e.g., the BS 110), and perform an interference signal removing operation corresponding to the bandwidth of the interference cell, based on the bandwidth information of the interference cell. Thus, an interference signal caused by the interference cell may be efficiently removed even when the bandwidth of the serving cell is different from the bandwidth of the interference cell. Accordingly, the performance of the UE 140 may be improved.

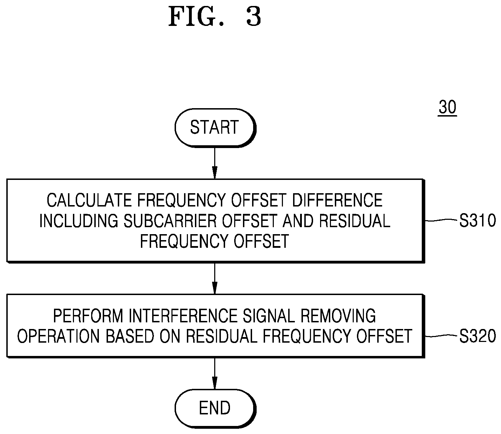

Specific examples of the interference signal removing operation according to the inventive concepts are described below with reference to FIGS. 3 to 11.

FIG. 3 is a flowchart of an operating method of a UE, according to embodiments. Referring to FIG. 3, an operating method 30 of an UE for removing an interference signal caused by an interference cell may include a plurality of operations S310 and S320.

Referring further to FIG. 1, in operation S310, the UE 140 may calculate a frequency offset difference between a serving cell and an interference cell, including a subcarrier offset and a residual frequency offset. The subcarrier offset may refer to an integer multiple of an SCS and the residual frequency offset may refer to the remaining frequency offset difference excluding the subcarrier offset. In embodiments, the UE 140 may perform wireless communication by initially connecting to the BS 110. When it is assumed that the frequency offset for the serving cell signal transmitted by the BS 110 is 0, the reception signal received by the UE 140 may be expressed as the following equation.

[Equation 1]

$$y[n] = y_S[n] + y_I[n]e^{-\frac{j2\pi \epsilon n}{N}} + v[n]$$

$y[n]$ may represent a reception signal received by the UE 140 in the time domain, $y_S[n]$ may refer to a serving cell signal, and $y_I[n]e^{-\frac{j2\pi \epsilon n}{N}}$ may represent an interference cell signal, which is an interference signal reflecting the frequency offset difference between the serving cell and the interference cell. N may represent the size of fast Fourier transform (FFT). ε may represent a frequency offset obtained by normalizing the frequency offset difference between the serving cell and the interference cell to an SCS, and may be referred to as a normalized frequency offset. $v[n]$ may represent noise. According to embodiments, 'n' may represent time (e.g., a symbol, slot, etc.). Equation 1 above may be applied even when the frequency offset for the serving cell signal is not 0. For example, the UE 140 may set the frequency offset for the serving cell signal to 0 by adjusting the center frequency based on the frequency offset for the serving cell.

The interference cell signal $y_{\mathrm{I}}[n]e^{-\frac{j2\pi\epsilon n}{N}}$ may be expressed in the frequency domain as the following equation.

[Equation 2]

$$Y_{\mathrm{I}}[k] = \sum_{n=0}^{N-1} y_{\mathrm{I}}[n]e^{-\frac{j2\pi\epsilon n}{N}} e^{-\frac{j2\pi kn}{N}} = \sum_{n=0}^{N-1} y_{\mathrm{I}}[n]e^{-\frac{j2\pi(\epsilon+k)n}{N}}$$

$Y_{\mathrm{I}}[k]$ may represent the interference cell signal received by the UE 140 in the frequency domain. According to embodiments, 'k' may represent a frequency (e.g., a subcarrier, etc.).

In embodiments, when the subcarrier offset is defined as a maximum (or highest) integer less than or equal to twice the normalized frequency offset ε, and the residual frequency offset is defined as a value obtained by subtracting the subcarrier offset from the normalized frequency offset ε, the interference cell signal $Y_{\mathrm{I}}[k]$ may be expressed as the following equation when the frequency offset difference is divided into the subcarrier offset and the residual frequency offset.

[Equation 3]

$$Y_{\mathrm{I}}[k] = \sum_{n=0}^{N-1} y_{\mathrm{I}}[n]e^{-\frac{j2\pi(\epsilon_r+(k+k_0))n}{N}}$$

$k_0$ may represent the subcarrier offset. $\epsilon_r$ may represent the residual frequency offset and may have a value greater than or equal to -0.5 and less than 0.5. The UE 140 may calculate the frequency offset difference including the subcarrier offset $k_0$ and the residual frequency offset $\epsilon_r$ based on the frequency offset of the serving cell and the frequency offset of the interference cell.

In operation S320, the UE 140 may perform an interference signal removing operation based on the residual frequency offset. As the absolute value of the residual frequency offset is closer to 0, the influence of the interference CRS may relatively decrease, and as the absolute value of the residual frequency offset is closer to 0.5, the influence of the interference CRS may relatively increase. For example, when the absolute value of the residual frequency offset is 0, the interference signal removing operation may be performed by taking into account the subcarrier offset on the reception signal received by the UE 140, and when the absolute value of the residual frequency offset is 0.5, the interference signal removing operation may be performed by taking into account the subcarrier offset and the residual frequency offset on the reception signal received by the UE 140.

In embodiments, the interference signal removing operation may include a first interference signal removing operation of repeatedly compensating for the frequency offset difference (e.g., the subcarrier offset and the residual frequency offset) between the serving cell and the interference cell on the reception signal received by the UE 140, a second interference signal removing operation of repeatedly compensating for the subcarrier offset on the reception signal received by the UE 140, and/or a third interference signal removing operation of compensating for the subcarrier offset once on the reception signal received by the UE 140. The UE 140 may perform one of the first to third interference signal removing operations selected based on the absolute value of the residual frequency offset.

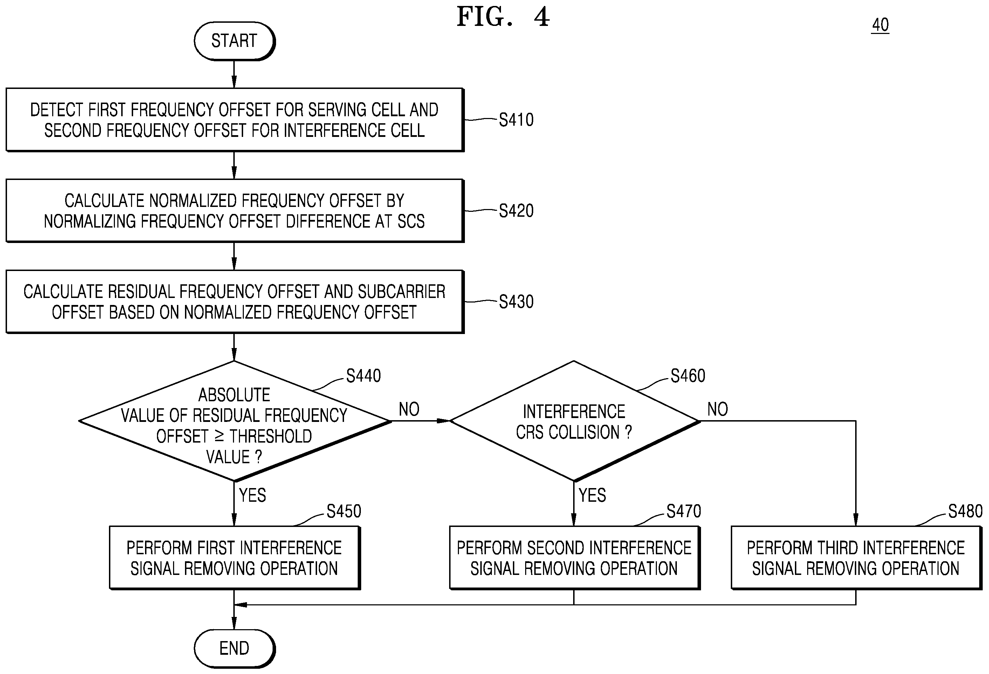

For example, the UE 140 may perform the first interference signal removing operation when (e.g., in response to determining that) the absolute value of the residual frequency offset is greater than or equal to a threshold value, may perform the second interference signal removing operation when (e.g., in response to determining that) the absolute value of the residual frequency offset is less than the threshold value and there is an interference CRS collision, and may perform the second interference signal removing operation when (e.g., in response to determining that) the absolute value of the residual frequency offset is less than the threshold value and there is no interference CRS collision. The interference CRS collision may mean that the CRS position of the interference cell overlaps the CRS position of the serving cell. Specific examples of the first to third interference signal removing operations are described below with reference to FIGS. 4 to 7.

The first interference removing operation may consume relatively more power than the second or third interference removing operation and may remove interference signals relatively precisely. The UE 140 according to the inventive concepts may perform the interference signal removing operation for compensating for the subcarrier or compensating for both the subcarrier offset and the residual frequency offset, based on the residual frequency offset. Accordingly, the interference signal caused by the interference cell may be removed efficiently, and thus, the performance of the UE 140 may be improved.

FIG. 4 is a flowchart of an operating method of a UE, according to embodiments. Referring to FIG. 4, an operating method 40 of an UE for removing an interference signal caused by an interference cell may include a plurality of operations S410 to S480. S410 to S430 may correspond to S310, whilst S440 to S480 may correspond to S320.

Referring further to FIG. 1, in operation S410, the UE 140 may detect a first frequency offset for the serving cell and a second frequency offset for the interference cell. In embodiments, the UE 140 may receive signaled information about the serving cell and the interfering cell from the BS 110 which the UE 140 initially connects to and performs wireless communication with, and may detect the first frequency offset and the second frequency offset by searching for the serving cell and the interference cell based on the signaled information.

In operation S420, the UE 140 may calculate a normalized frequency offset by normalizing the frequency offset difference at the SCS. The frequency offset difference may refer to the difference between the first frequency offset and the second frequency offset. In embodiments, the UE 140 may calculate the frequency offset difference based on the first frequency offset and the second frequency offset, which are detected in operation S410, and may signal information about the SCS from the BS 110 which the UE 140 initially connects to and performs wireless communication with. The UE 140 may calculate the normalized frequency offset by normalizing the frequency offset difference at the SCS. The normalized frequency offset may be equal to the normalized frequency offset $\varepsilon$ of Equation 1 above.

In operation S430, the UE 140 may calculate the residual frequency offset and the subcarrier offset based on the normalized frequency offset. In embodiments, the UE 140 may calculate, as the subcarrier offset, a maximum (or highest) integer less than or equal to twice the normalized frequency offset $\varepsilon$, and may calculate, as the residual frequency offset, a value obtained by subtracting the subcarrier offset from the normalized frequency offset $\varepsilon$.

In operation S440, the UE 140 may determine whether the absolute value of the residual frequency offset is greater than or equal to a threshold value. The threshold value may represent a specific preset (or alternatively, given) value. In embodiments, the threshold value may be a value from 0 to 0.5, which is preset (or alternatively, given) by the UE 140 based on any one of a reference signal received power (RSRP), received signal strength indicator (RSSI), or signal to interference plus noise ratio (SINR). For example, the threshold value may be set relatively closer to 0.5 when any one of the RSRP, the RSSI, or the SINR has a relatively great value, and the threshold value may be set relatively closer to 0 when any one of the RSRP, the RSSI, or the SINR has a relatively small value.

In operation S450, when the UE 140 determines in operation S440 that the absolute value of the residual frequency offset is greater than or equal to the threshold value, the UE 140 may perform a first interference signal removing operation of repeatedly compensating for the frequency offset difference between the serving cell and the interference cell on the reception signal received by the UE 140.

In operation S460, when the UE 140 determines in operation S440 that the absolute value of the residual frequency offset is less than the threshold value, the UE 140 may determine whether there is an interference CRS collision. The interference CRS collision may mean that the CRS position of the interference cell overlaps the CRS position of the serving cell. In embodiments, the UE 140 may not take into account the residual frequency offset when the UE determines that the absolute value of the residual frequency offset is less than the threshold value. Accordingly, the value of the frequency offset difference used by the UE 140 to perform the interference signal removing operation may be set equal to the subcarrier offset. The UE 140 may determine that there is an interference CRS collision when there are at least one CRS position of the serving cell and at least one CRS position of the interference cell, which satisfy the following equation among the CRS positions of the serving cell and the CRS positions of the interference cell within a resource block (e.g., the RB 208 of FIG. 2).

[Equation 4]

$$k_{S,CRS} = (k_{I,CRS} - k_0)mod\,12$$

$k_{S,CRS}$ may represent the CRS position of the serving cell within the resource block (e.g., the RB 208 of FIG. 2) and $k_{I,CRS}$ may represent the CRS position of the interference cell within the resource block (e.g., the RB 208 of FIG. 2). $k_0$ may represent the subcarrier offset.

In operation S470, when the UE 140 determines in operation S460 that there is an interference CRS collision, the UE 140 may perform a second interference signal removing operation of repeatedly compensating for the subcarrier offset on the reception signal received by the UE 140.

In operation S480, when the UE 140 determines in operation S460 that there is no interference CRS collision, the UE 140 may perform a third interference signal removing operation of compensating for the subcarrier offset once on the reception signal received by the UE 140.

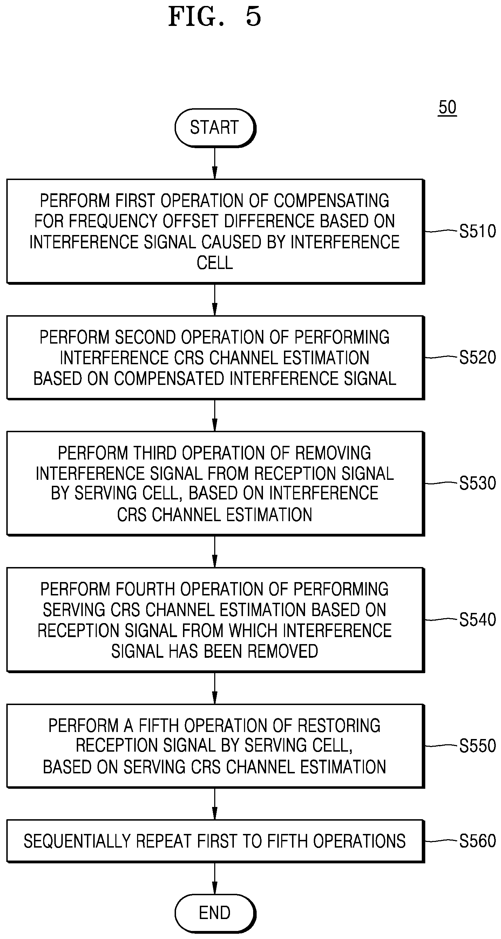

FIG. 5 is a flowchart of a first interference signal removing operation according to embodiments. Referring to FIG. 5, a first interference signal removing operation 50 may include a plurality of operations S510 to S560.

Referring further to FIG. 1, in operation S510, the UE 140 may perform a first operation of compensating for the frequency offset difference based on the interference signal caused by the interference cell. In embodiments, the UE 140 may generate a compensated interference signal as in the following equation by compensating for the frequency offset difference on the reception signal $y[n]$ in Equation 1 above.

[Equation 5]

$$\bar{y}_{\mathrm{I},1}[n] = y[n]e^{\frac{j2\pi\epsilon n}{N}} = y_{\mathrm{I}}[n] + (y_{\mathrm{S}}[n] + v[n])e^{\frac{j2\pi\epsilon n}{N}} = y_{\mathrm{I}}[n] + \bar{v}_{\mathrm{I},1}[n]$$

$\bar{y}_{\mathrm{I},1}[n]$ may represent a compensated interference signal obtained by compensating for the frequency offset difference in the time domain, and $\bar{v}_{\mathrm{I},1}[n]$ may represent a signal obtained by adding noise to the serving cell signal.

In operation S520, the UE 140 may perform a second operation of performing interference CRS channel estimation based on the compensated interference signal. In embodiments, the UE 140 may convert the compensated interference signal $\bar{y}_{\mathrm{I},1}[n]$ in the time domain into the frequency domain through FFT, and may perform interference cell CRS channel estimation by using a reception signal existing at the CRS position (e.g., at time/frequency resources of the CRS transmission signal of the interference cell) of the interference cell and a CRS transmission signal of the interference cell. The UE 140 may obtain information about the CRS transmission signal of the interference cell (e.g., the RE position and the RB area of the CRS transmission signal of the interference cell) based on a master information block (MIB) of the BS 110 or the interference cell that performs wireless communication with the UE 140.

For example, the compensated interference signal in the frequency domain through FFT may be expressed as Equation 6 below, and the interference CRS estimation channel may be expressed as Equation 7 below based on Equation 6 below.

[Equation 6]

$$\bar{Y}_{\mathrm{I},1}[k] = \mathrm{FFT}\{\bar{y}_{\mathrm{I},1}[n]\} = Y_{\mathrm{I}}[k] + \bar{V}_{\mathrm{I},1}[k]$$

$\bar{Y}_{\mathrm{I},1}[k]$ may represent the compensated interference signal in the frequency domain.

[Equation 7]

$$\widetilde{H}_{\mathrm{I},1}[k] = \mathrm{CE}\big(\bar{Y}_{\mathrm{I},1}[k], X_{\mathrm{I}}[k]\big)$$

$X_{\mathrm{I}}[k]$ may represent the CRS transmission signal of the interference cell in the frequency domain, and $\mathrm{CE}(y,x)$ may represent the channel estimation operation using channels y and x. $\tilde{H}_{\mathrm{I},1}[k]$ may represent the interference CRS estimation channel using $\mathrm{CE}(y,x)$.

In operation S530, the UE 140 may perform a third operation of removing the interference signal from the reception signal, based on the interference CRS channel estimation. In embodiments, the UE 140 may restore the interference signal based on the interference CRS estimation channel $\tilde{H}_{\mathrm{I},1}[k]$, reflect the frequency offset difference compensated in operation S510 in the time domain, and then remove the interference signal from the entire reception signal.

For example, the interference signal restored by the UE 140 may be expressed as Equation 8 below, and the reception signal from which the interference signal has been removed based on Equation 8 below may be expressed as Equation 9 below.

[Equation 8]

$$\tilde{Y}_{\mathrm{I},1}[k] = \widetilde{H}_{\mathrm{I},1}[k]X_{\mathrm{I}}[k]$$

$\check{Y}_{I,1}[k]$ may represent the interference signal restored based on the interference CRS estimation channel $\tilde{H}_{I,1}[k]$.

[Equation 9]

$$\bar{y}_{S,1}[n] = y[n] - \tilde{y}_{I,1}[n]e^{-\frac{j2\pi\epsilon n}{N}} = y_S[n] + \left(y_I[n]e^{-\frac{j2\pi\epsilon n}{N}} - \tilde{y}_{I,1}[n]e^{-\frac{j2\pi\epsilon n}{N}}\right) + v[n] = y_S[n] + \bar{v}_{S,1}[n]$$

$\bar{y}_{S,1}[n]$ may represent the reception signal from which the interference signal has been removed in the time domain, and $\tilde{y}_{I,1}[n]$ may represent the restored interference signal of the time domain obtained by applying inverse FFT to the restored interference signal $\check{Y}_{I,1}[k]$. $\bar{v}_{S,1}[n]$ may represent a residual interference signal and noise, and the residual interference signal may represent $y_I[n]e^{-\frac{j2\pi\epsilon n}{N}} - \tilde{y}_{I,1}[n]e^{-\frac{j2\pi\epsilon n}{N}}$. When the residual interference signal is 0, it may mean that the interference signal has been completely removed.

In operation S540, the UE 140 may perform a fourth operation of performing serving CRS channel estimation based on the reception signal from which the interference signal has been removed. In embodiments, the UE 140 may convert the reception signal $\bar{y}_{S,1}[n]$, from which the interference signal has been removed (may also be referred to herein as an updated reception signal), into the frequency domain through FFT, and perform serving CRS channel estimation based on the CRS transmission signal of the serving cell.

For example, the reception signal from which the interference signal in the frequency domain has been removed through FFT may be expressed as Equation 10 below, and the serving CRS estimation channel may be expressed as Equation 11, below based on Equation 10 below.

[Equation 10]

$$\bar{Y}_{S,1}[k] = \text{FFT}\{\bar{y}_{S,1}[n]\} = Y_S[k] + \bar{V}_{S,1}[k]$$

$\check{Y}_{S,1}[k]$ may represent the reception signal from which the interference signal in the frequency domain has been removed.

[Equation 11]

$$\tilde{H}_{S,1}[k] = \text{CE}\left(\bar{Y}_{S,1}[k], X_S[k]\right)$$

$X_S[k]$ may represent the CRS transmission signal of the serving cell in the frequency domain, and $\tilde{H}_{S,1}[k]$ may represent the serving CRS estimation channel using CE(y,x).

In operation S550, the UE 140 may perform a fifth operation of restoring the reception signal by the serving cell, based on the serving CRS channel estimation. In embodiments, the UE 140 may recover the reception signal by the serving cell, based on the serving CRS estimation channel $\tilde{H}_{S,1}[k]$.

For example, the reception signal restored by the UE 140 may be expressed as Equation 12 below.

[Equation 12]

$$\check{Y}_{S,1}[k] = \tilde{H}_{S,1}[k]X_1[k]$$

$\check{Y}_{S,1}[k]$ may represent the reception signal by the serving cell, which is restored based on the serving CRS estimation channel $\tilde{H}_{S,1}[k]$.

In operation S560, the UE 140 may sequentially repeat the first to fifth operations. In embodiments, the UE 140 may sequentially repeat the first to fifth operations based on the restored reception signal by the serving cell. For example, the UE 140 may remove the influence of the restored reception signal by the serving cell in the fifth operation performed immediately (or promptly) before from the entire reception signal in the first operation performed immediately (or promptly) before (e.g., the reception signal $y[n]$ in Equation 1), compensate for the frequency offset difference based on the interference signal, and then perform the first to fifth operations. According to embodiments, the first to fifth operations may be performed with respect to a remaining portion of the reception signal obtained by removing (e.g., subtracting) the restored reception signal from an entirety of the reception signal. The entire reception signal from which the influence of the restored reception signal by the serving cell has been removed may be expressed as the following equation.

[Equation 13]

$$\bar{y}_{I,2}[n] = y[n] - \tilde{y}_{S,1}[n]e^{-\frac{j2\pi\varepsilon n}{N}} = y_I[n] + \left(y_S[n]e^{-\frac{j2\pi\varepsilon n}{N}} - \tilde{y}_{S,1}[n]e^{-\frac{j2\pi\varepsilon n}{N}}\right) + v[n] = y_I[n] + \bar{v}_{I,2}[n]$$

$\bar{y}_{I,2}[n]$ may represent the entire reception signal from which the influence of the restored reception signal by the serving cell in the time domain has been removed, and $\tilde{y}_{S,1}[n]$ may represent the restored reception signal by the serving cell in the time domain, to which inverse FFT is applied to the restored reception signal by the serving cell $\check{Y}_{S,1}[k]$. $\bar{v}_{I,2}[n]$ may represent a residual serving signal and noise, and the residual serving signal may represent $y_S[n]e^{-\frac{j2\pi\varepsilon n}{N}} - \tilde{y}_{S,1}[n]e^{-\frac{j2\pi\varepsilon n}{N}}$. When the residual serving signal is 0, it may mean that the influence of the reception signal by the serving cell has been completely removed.

In embodiments, the UE 140 may sequentially repeat the first to fifth operations until a convergence condition is satisfied. For example, the convergence condition may be that a difference value between the SINR at the first iteration operation and the SINR at the second iteration operation after the first iteration operation (e.g., between sequential iterations) is less than a threshold SINR. For example, the convergence condition may be that a mean square error (MSE) for a channel of the serving cell in the first iteration operation and a channel of the serving cell in the second iteration operation after the first iteration operation is less than a specific value (e.g., a preset (or alternatively, given) value).

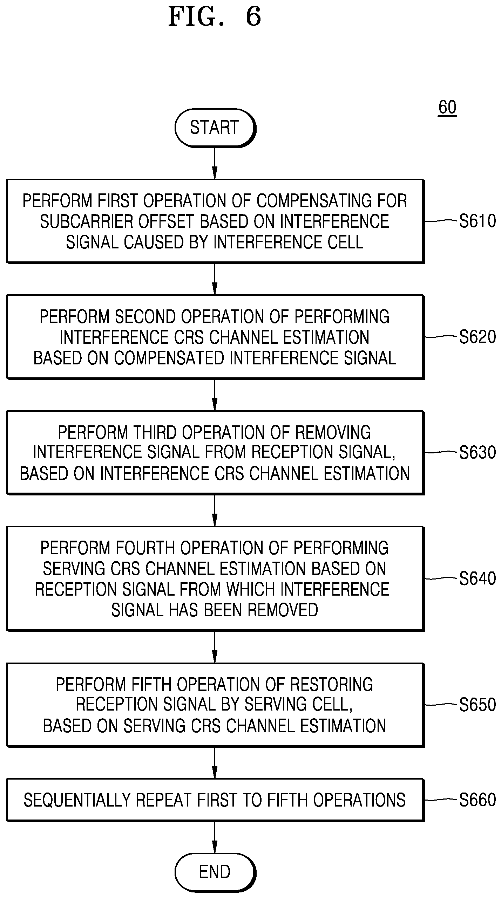

FIG. 6 is a flowchart of a second interference signal removing operation according to embodiments. Referring to FIG. 6, a second interference signal removing operation 60 may include a plurality of operations S610 to S660.

Referring further to FIG. 1, in operation S610, the UE 140 may perform a first operation of compensating for the subcarrier offset based on the interference signal caused by the interference cell. In embodiments, the UE 140 may calculate the reception signal in the frequency domain by applying FFT to the reception signal and generate the compensated interference signal by compensating for the subcarrier offset. When the UE 140 determines that the absolute value of the residual frequency offset is less than a threshold value, the UE 140 may not take into account the residual frequency offset. Because the frequency offset difference may be equal (or similar) to the subcarrier offset (or treated as being equal to the subcarrier offset), the reception signal may be expressed as Equation 15 below and the compensated interference signal may be expressed as Equation 16 below.

[Equation 15]

$$y[n] = y_S[n] + y_I[n]e^{-\frac{j2\pi k_0 n}{N}} + v[n]$$

$y[n]$ may represent the reception signal when the residual frequency offset in the time domain is not taken into account, and $k_0$ may represent the subcarrier offset.

[Equation 16]

$$\bar{Y}_{I,1}[k] = Y[k + k_0] = Y_I[k] + Y_S[k + k_0] + V[k + k_0] = Y_I[k] + \bar{V}_{I,1}[k]$$

$\bar{Y}_{I,1}[k]$ may represent the compensated interference signal, and $Y[k + k_0]$ may represent the reception signal in the frequency domain, in which FFT is applied to the received signal and the subcarrier offset is compensated for.

In operation S620, the UE 140 may perform a second operation of performing interference CRS channel estimation based on the compensated interference signal. In embodiments, the UE 140 may perform the interference cell CRS channel estimation on the compensated interference signal $\bar{Y}_{I,1}[k]$ by using the reception signal existing at the CRS position of the interference cell and the CRS transmission signal of the interference cell. The UE 140 may obtain information about the CRS transmission signal of the interference cell (e.g., the RE position and the RB area of the CRS transmission signal of the interference cell) based on an MIB of the BS 110 or the interference cell that performs wireless communication with the UE 140. For example, the UE 140 may calculate the interference CRS estimation channel by using CE(y,x) in the same manner as in (or a similar manner to) Equation 7 above.

In operation S630, the UE 140 may perform a third operation of removing the interference signal from the reception signal by the serving cell, based on the interference CRS channel estimation. In embodiments, the UE 140 may restore the interference signal based on the interference CRS estimation channel calculated in operation S630, compensate for the subcarrier offset based on the serving cell, and then remove the interference signal from the entire reception signal.

For example, the interference signal restored by the UE 140 may be calculated in the same manner as in (or a similar manner to) Equation 8 above, and the reception signal from which the interference signal has been removed may be expressed as the following equation.

[Equation 17]

$$\bar{Y}_{S,1}[k] = Y[k] - \tilde{Y}_{I,1}[k - k_0]$$

$\bar{Y}_{S,1}[k]$ may represent the reception signal from which the interference signal in the frequency domain has been removed.

In operation S640, the UE 140 may perform a fourth operation of performing serving CRS channel estimation based on the reception signal from which the interference signal has been removed. In embodiments, the UE 140 may calculate the serving CRS estimation channel by using CE(y,x) in the same manner as in (or a similar manner to) Equation 11 above.

In operation S650, the UE 140 may perform a fifth operation of restoring the reception signal by the serving cell, based on the serving CRS channel estimation. In embodiments, the UE 140 may recover the reception signal by the serving cell, based on the serving CRS estimation channel. For example, the reception signal restored by the UE 140 may be calculated in the same manner as in (or a similar manner to) Equation 12 above.

In operation S660, the UE 140 may sequentially repeat the first to fifth operations. In embodiments, the UE 140 may sequentially repeat the first to fifth operations based on the restored reception signal by the serving cell. For example, the UE 140 may remove the influence of the restored reception signal by the serving cell in the fifth operation performed immediately (or promptly) before from the entire reception signal in the first operation performed immediately (or promptly) before (e.g., the signal in which FFT is applied to the reception signal y[n] in Equation 15), compensate for the subcarrier offset based on the interference signal, and then perform the first to fifth operations. The entire reception signal from which the influence of the restored reception signal by the serving cell has been removed may be expressed as the following equation.

[Equation 18]

$$\bar{Y}_{I,2}[k] = Y[k] - \tilde{Y}_{S,1}[k + k_0]$$

$\bar{Y}_{I,2}[k]$ may represent the entire reception signal from which the influence of the restored reception signal by the serving cell in the frequency domain has been removed.

In embodiments, the UE 140 may sequentially repeat the first to fifth operations until a convergence condition is satisfied. For example, the convergence condition may be that a difference value between the SINR at the first iteration operation and the SINR at the second iteration operation after the first iteration operation is less than a threshold SINR. For example, the convergence condition may be that an MSE for a channel of the serving cell in the first iteration operation and a channel of the serving cell in the second iteration operation after the first iteration operation is less than a specific value (e.g., a preset (or alternatively, given) value).

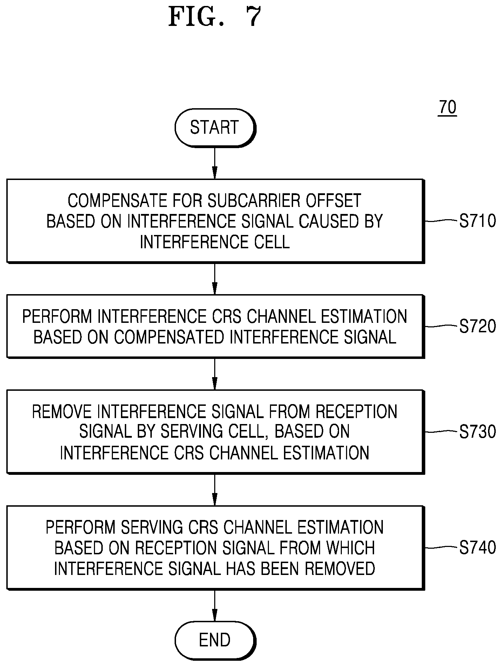

FIG. 7 is a flowchart of a third interference signal removing operation according to embodiments. Referring to FIG. 7, a third interference signal removing operation 70 may include a plurality of operations S710 to S740.

Referring further to FIG. 1, in operation S710, the UE 140 may compensate for the subcarrier offset based on the interference signal caused by the interference cell. In embodiments, operation S710 may be identical (or similar) to operation S610 of FIG. 6.

In operation S720, the UE 140 may perform interference CRS channel estimation based on the compensated interference signal. In embodiments, operation S720 may be identical (or similar) to operation S620 of FIG. 6.

In operation S730, the UE 140 may remove the interference signal from the reception signal by the serving cell, based on the interference CRS channel estimation. In embodiments, operation S730 may be identical (or similar)) to operation S630 of FIG. 6.

In operation S740, the UE 140 may perform serving CRS channel estimation based on the reception signal from which the interference signal has been removed. In embodiments, operation S740 may be identical (or similar) to operation S640 of FIG. 6.

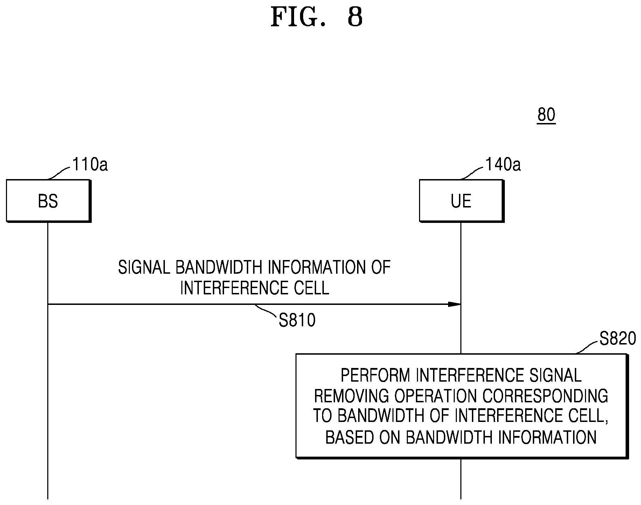

FIG. 8 is a flowchart of an operating method of a wireless communication system, according to embodiments. Referring to FIG. 8, an operating method 80 of a wireless communication system may include a plurality of operations S810 and S820. A BS 110a and a UE 140a may be respectively examples of the BS 110 and the UE 140 of FIG. 1. Descriptions redundant with those of FIG. 1 are omitted.

In operation S810, the UE 140a may receive bandwidth information of an interference cell from the BS 110a. In embodiments, the UE 140a may receive the bandwidth information of the interference cell through any one of radio resource control (RRC) signaling, medium access control-control element (MAC-CE) signaling, or downlink control indicator (DCI) signaling.

In operation S820, the UE 140a may perform an interference signal removing operation corresponding to the bandwidth of the interference cell, based on the bandwidth information. In embodiments, the UE 140a may perform the interference signal removing operation described above with reference to FIGS. 3 to 7 on the bandwidth of the interference cell. For example, when the bandwidth of the interference cell (e.g., the BS 120 of FIG. 1) is narrower than the bandwidth of the BS 110a, which is a serving cell, the UE 140a may perform the interference signal removing operation described above with respect to FIGS. 3 to 7 only on the bandwidth of the interference cell. By performing the interference signal removing operation corresponding to the bandwidth of the interference cell, based on the bandwidth information of the interference cell, the interference signal caused by the interference cell may be efficiently removed even when the bandwidth of the serving cell is different from the bandwidth of the interference cell, and the performance of the UE 140a may be improved.

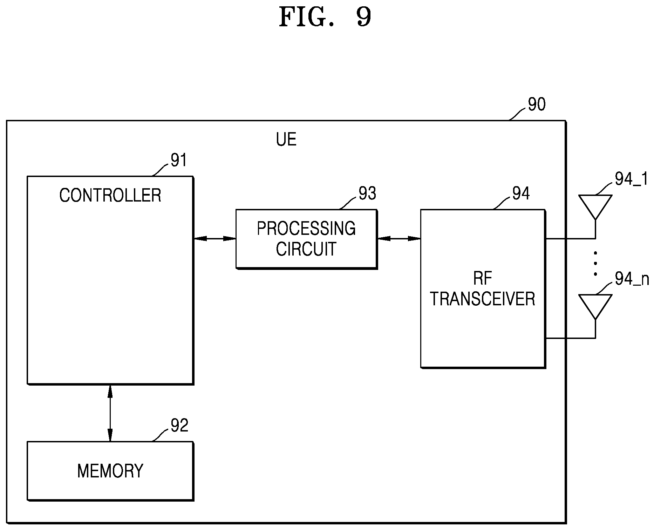

FIG. 9 is a block diagram of a UE according to embodiments. An implementation example of a UE 90 of FIG. 9 may be applied to the UE 140 of FIG. 1.

The UE 90 may include a controller 91, a memory 92, a processing circuit 93, a radio frequency (RF) transceiver 94, and/or a plurality of antennas 94_1 to 94_n. The RF transceiver 94 may receive RF signals transmitted by the BS 110 of FIG. 1 through the antennas 94_1 to 94_n. The RF transceiver 94 may down-convert the received RF signals into intermediate frequency or baseband signals. The RF transceiver 94 may up-convert the intermediate frequency or baseband signals output from the processing circuit 93 into RF signals and transmit the RF signals through the antennas 94_1 to 94_n.

The processing circuit 93 may generate data signals by filtering, decoding, and/or digitizing the intermediate frequency or baseband signals and may receive data signals from the controller 91. The processing circuit 93 may encode, multiplex, and/or analogize the received data signals.

In embodiments, the controller 91 may control the operation of the processing circuit 93 and the processing circuit 93 may perform the interference signal removing operations described above with reference to FIGS. 1 to 8. For example, the processing circuit 93 may divide the frequency offset difference between the serving cell and the interference cell into the subcarrier offset and the residual frequency offset, and may perform the interference signal removing operation of compensating for the subcarrier or compensating for both the subcarrier offset and the residual frequency offset, based on the residual frequency offset. The subcarrier offset has a value corresponding to an integer multiple of the SCS. Accordingly, even when the frequency offset difference between the serving cell and the interference cell is relatively large, the interference signal caused by the interference cell may be efficiently removed and the performance of the UE 90 may be improved. For example, the processing circuit 93 may obtain the bandwidth information of the interference cell by performing signaling with the serving cell through the antennas 94_1 to 94_n. In addition, by performing the interference signal removing operation corresponding to the bandwidth of the interference cell, based on the bandwidth information of the interference cell, the processing circuit 93 may efficiently remove the interference signal caused by the interference cell even when the bandwidth of the serving cell is different from the bandwidth of the interference cell. Accordingly, the performance of the UE 90 may be improved.

According to embodiments, after the processing circuit 93 removes the interference signal from the reception signal, the UE 90 may perform network communication with the BS 110. For example, the UE 90 may generate a first signal (e.g., using the controller 91 and/or the processing circuit 93), process the first signal to perform one or more among modulating, upconverting, filtering, amplifying and/or encrypting on the first signal, and transmit the processed first signal to the BS 110 via the antennas 94_1 to 94_n. Additionally or alternatively, the UE 90 may receive a second signal from the BS 110 via the antennas 94_1 to 94_n, process the second signal to perform one or more among demodulating, downconverting, filtering, amplifying and/or decrypting on the second signal (e.g., using the controller 91 and/or the processing circuit 93), and perform a further operation(s) based on the processed second signal. For example, the further operation(s) may include one or more of providing the processed second signal to a corresponding application executing on the UE 90, storing the processed second signal (e.g., in the memory 92), sending a response signal to the BS 110 (e.g., based on a processing result of the corresponding application executing on the UE 90), etc.

The controller 91 may additionally process data signals and execute programs and/or processes stored in the memory 92 to control the overall operation of the UE 90.

The memory 92 may have any data storage structure. For example, the memory 92 may include a volatile memory device, such as dynamic random access memory (DRAM) or static random access memory (SRAM), and/or may also include a non-volatile memory device, such as flash memory or resistive random access memory (RRAM).

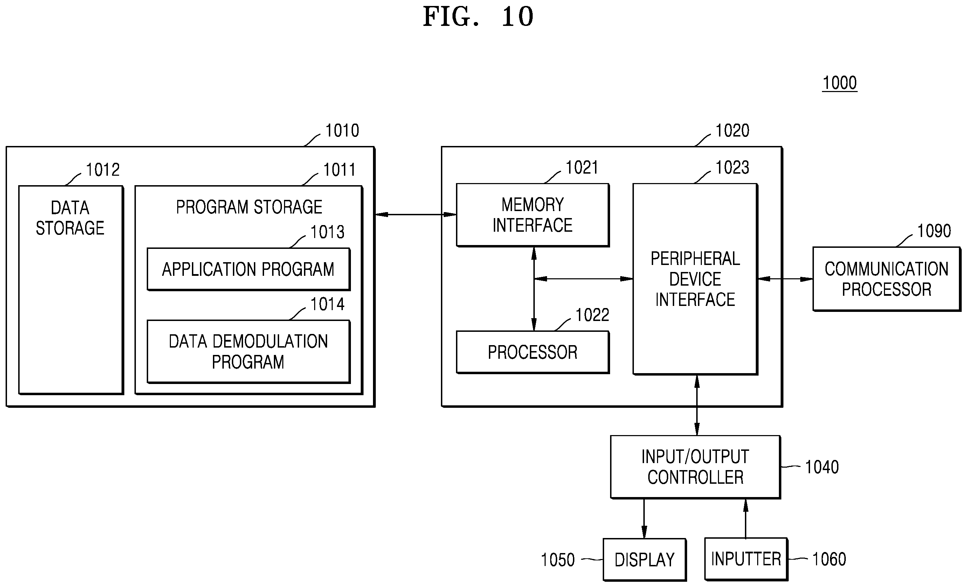

FIG. 10 is a block diagram of an electronic device according to embodiments. An electronic device 1000 may be a UE according to embodiments.

Referring to FIG. 10, the electronic device 1000 may include a memory 1010, a processor unit 1020, an input/output controller 1040, a display 1050, an inputter 1060, and/or a communication processor 1090. A plurality of memories 1010 may be provided. The respective elements are described below.

The memory 1010 may include a program storage 1011 that stores a program for controlling the operation of the electronic device 1000 and a data storage 1012 that stores data generated during the execution of the program. The data storage 1012 may store data required (or otherwise used) for the operations of an application program 1013 and/or a data demodulation program 1014, and/or may store data generated during the operations of the application program 1013 and/or the data demodulation program 1014.

The program storage 1011 may include the application program 1013 and the data demodulation program 1014. The programs included in the program storage 1011 may be sets of instructions and may be referred to as instruction sets. The application program 1013 may include program codes for executing various applications operating on the electronic device 1000. That is, the application program 1013 may include codes (or commands) related to various applications driven by a processor 1022.

The electronic device 1000 may include the communication processor 1090 that performs a communication function for voice communication and data communication. A peripheral device interface 1023 may control the connection between the input/output controller 1040, the communication processor 1090, the processor 1022, and/or a memory interface 1021. The processor 1022 may control (or communicate with) a plurality of BSs to provide corresponding services by using at least one software program. In this case, the processor 1022 may execute at least one program stored in the memory 1010 to provide (or receive) a service corresponding to the program.

The processor 1022 may perform the interference signal removing operation described above with reference to FIGS. 1 to 8. For example, the processor 1022 may divide the frequency offset difference between the serving cell and the interference cell into the subcarrier offset and the residual frequency offset, and may perform the interference signal removing operation of compensating for the subcarrier or compensating for both the subcarrier offset and the residual frequency offset, based on the residual frequency offset. The subcarrier offset has a value corresponding to an integer multiple of the SCS. Accordingly, even when the frequency offset difference between the serving cell and the interference cell is relatively large, the interference signal caused by the interference cell may be efficiently removed and the performance of the electronic device 1000 may be improved. For example, the processor 1022 may obtain bandwidth information of the interference cell by performing signaling with the serving cell. In addition, by performing the interference signal removing operation corresponding to the bandwidth of the interference cell, based on the bandwidth information of the interference cell, the processor 1022 may efficiently remove the interference signal caused by the interference cell even when the bandwidth of the serving cell is different from the bandwidth of the interference cell. Accordingly, the performance of the electronic device 1000 may be improved.

The input/output controller 1040 may provide an interface between an input/output device, such as the display 1050 and the inputter 1060, and the peripheral device interface 1023. The display 1050 may display state information, input text, moving pictures, and/or still pictures. For example, the display 1050 may display information about application programs driven by the processor 1022.

The inputter 1060 may provide input data, which is generated by the selection of the electronic device 1000, to the processor unit 1020 through the input/output controller 1040. The inputter 1060 may include a keypad including at least one hardware button, a touchpad that senses touch information, or the like. For example, the inputter 1060 may provide touch information (e.g., touch, touch motion, and/or touch release, which are detected through the touch pad) to the processor 1022 through the input/output controller 1040.

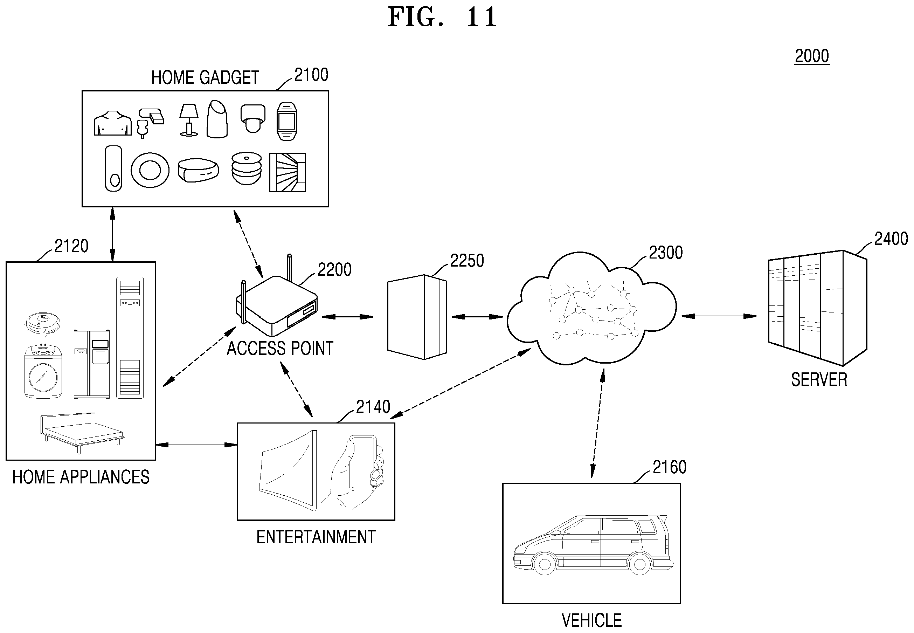

FIG. 11 is a conceptual diagram illustrating an Internet of things (IoT) network system to which embodiments are applied.

Referring to FIG. 11, an IoT network system 2000 may include a plurality of IoT devices 2100, 2120, 2140, and/or 2160, an access point 2200, a gateway 2250, a wireless network 2300, and/or a server 2400. The IoT may refer to a network between things using wired and/or wireless communication.

The IoT devices 2100, 2120, 2140, and/or 2160 may form a group according to the characteristic of each IoT device. For example, the IoT devices may be grouped into a home gadget group 2100, a home appliance/furniture group 2120, an entertainment group 2140, or a vehicle group 2160. The IoT devices 2100, 2120, and 2140 may be connected to a communication network or other IoT devices through the access point 2200. The access point 2200 may be embedded into one IoT device. The gateway 2250 may change a protocol to connect the access point 2200 to an external wireless network. The IoT devices 2100, 2120, and 2140 may be connected to an external communication network through the gateway 2250. The wireless network 2300 may include the Internet and/or a public network. The IoT devices 2100, 2120, 2140, and 2160 may be connected through the wireless network 2300 to the server 2400 that provides a certain service, and a user may use the service through at least one of the IoT devices 2100, 2120, 2140, and 2160.

Each of the IoT devices 2100, 2120, 2140, and 2160 may perform the interference signal removing operations described above with reference to FIGS. 1 to 8. For example, the IoT devices 2100, 2120, 2140, and 2160 may divide the frequency offset difference between the serving cell and the interference cell into the subcarrier offset and the residual frequency offset, and may perform the interference signal removing operation of compensating for the subcarrier or compensating for both the subcarrier offset and the residual frequency offset, based on the residual frequency offset. The subcarrier offset has a value corresponding to an integer multiple of the SCS. Accordingly, even when the frequency offset difference between the serving cell and the interference cell is relatively large, the interference signal caused by the interference cell may be efficiently removed and the performance of the IoT devices 2100, 2120, 2140, and 2160 may be improved. For example, the IoT devices 2100, 2120, 2140, and 2160 may obtain the bandwidth information of the interference cell by performing signaling with the serving cell. In addition, by performing the interference signal removing operation corresponding to the bandwidth of the interference cell, based on the bandwidth information of the interference cell, the IoT devices 2100, 2120, 2140, and 2160 may efficiently remove the interference signal caused by the interference cell even when the bandwidth of the serving cell is different from the bandwidth of the interference cell. Accordingly, the performance of the IoT devices 2100, 2120, 2140, and 2160 may be improved.

Conventional devices and methods for compensating for inter-cell interference rely on further enhanced inter-cell interference coordination (FeICIC) to remove interfering signals. However, FeICIC is unable to remove an interfering signal from an interfering cell in circumstances in which a frequency offset difference between the interfering cell and a serving cell is larger. For example, in scenarios in which one of these cells is a terrestrial cell and the other is a non-terrestrial cell (e.g., a satellite), a larger frequency offset difference may occur due to the Doppler shift corresponding to the higher speeds at which the non-terrestrial cell may travel. Accordingly, the conventional devices and methods suffer from excessive inter-cell interference in circumstances involving higher frequency offset differences, resulting in poor communication performance.

However, according to embodiments, improved devices and methods are provided for removing or reducing inter-cell interference. For example, the improved devices and methods may involve obtaining a frequency offset difference between a serving cell and an interfering cell, and removing an interference signal from a reception signal based on one or more among a subcarrier offset and/or a residual frequency offset of the frequency offset difference. In so doing, the improved devices and methods may remove the interfering signal from the reception signal even in circumstances involving higher frequency offset differences. Accordingly, the improved devices and methods overcome the deficiencies of the conventional devices and methods to at least improve communication performance.

According to embodiments, operations described herein as being performed by the wireless communication system 10, the BS 110, the BS 120, the BS 130, the UE 140, the BS 110a, the UE 140a, the UE 90, the controller 91, the processing circuit 93, the RF transceiver 94, the electronic device 1000, the processor unit 1020, the input/output controller 1040, the communication processor 1090, the peripheral device interface 1023, the processor 1022, the memory interface 1021, the IoT network system 2000, each among the plurality of IoT devices 2100, 2120, 2140, and/or 2160, the access point 2200, the gateway 2250, and/or the server 2400 may be performed by processing circuitry. The term 'processing circuitry,' as used in the present disclosure, may refer to, for example, hardware including logic circuits; a hardware/software combination such as a processor executing software; or a combination thereof. For example, the processing circuitry more specifically may include, but is not limited to, a central processing unit (CPU), an arithmetic logic unit (ALU), a graphics processing unit (GPU), a digital signal processor, a microcomputer, a field programmable gate array (FPGA), a System-on-Chip (SoC), a programmable logic unit, a microprocessor, application-specific integrated circuit (ASIC), etc.

The various operations of methods described above may be performed by any suitable device capable of performing the operations, such as the processing circuitry discussed above. For example, as discussed above, the operations of methods described above may be performed by various hardware and/or software implemented in some form of hardware (e.g., processor, ASIC, etc.).

The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or operations of a method or algorithm, and/or functions, described in connection with embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium (e.g., the memory 92, the memory 1010, etc.). A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

While the inventive concepts have been particularly shown and described with reference to embodiments thereof, it will be understood that various changes in form and details may be made therein without departing from the scope of the following claims.

**Claims**

1. An operating method of a user equipment (UE) communicating with a base station (BS), the operating method comprising:

calculating a frequency offset difference between a serving cell and an interference cell based on a first frequency offset for the serving cell and a second frequency offset for the interference cell, the frequency offset difference including a subcarrier offset and a residual frequency offset, the subcarrier offset being an integer multiple of a subcarrier spacing (SCS); and

removing an interference signal from a reception signal received by the UE by compensating for the frequency offset difference based on the residual frequency offset.

**2.** The operating method of claim 1, wherein

the removing the interference signal includes removing the interference signal by performing a first interference signal removing operation, a second interference signal removing operation or a third interference signal removing operation;

the first interference signal removing operation is an operation of repeatedly compensating for the frequency offset difference;

the second interference signal removing operation is an operation of repeatedly compensating for the subcarrier offset; and

the third interference signal removing operation is an operation of compensating the subcarrier offset only once.

**3.** The operating method of claim 2, wherein the removing the interference signal includes removing the interference signal by performing the first interference signal removing operation in response to determining that an absolute value of the residual frequency offset is greater than or equal to a first threshold value, the first interference signal removing operation including:

a first operation of compensating for the frequency offset difference based on the interference signal to obtain a compensated interference signal;

a second operation of performing interference cell specific reference signal (CRS) channel estimation based on the compensated interference signal;

a third operation of removing the interference signal from the reception signal based on the interference CRS channel estimation to obtain an updated reception signal;

a fourth operation of performing serving CRS channel estimation based on the updated reception signal;

a fifth operation of restoring the reception signal based on the serving CRS channel estimation to obtain a restored reception signal; and

sequentially repeating the first to fifth operations based on the restored reception signal.

**4.** The operating method of claim 3, wherein

the sequentially repeating comprises sequentially repeating the first to fifth operations until a convergence condition is satisfied; and

the convergence condition is that a difference value between a signal to interference plus noise ratio (SINR) at a first iteration operation and an SINR at a second iteration operation is less than a threshold SINR, the second iteration operation being subsequent to the first iteration operation.

**5.** The operating method of claim 2, wherein the removing the interference signal includes removing the interference signal by performing the second interference signal removing operation in response to determining that an absolute value of the residual frequency offset is less than a first threshold value and that an interference CRS collision exists, the second interference signal removing operation including:

a first operation of compensating for the subcarrier offset based on the interference signal to obtain a compensated interference signal;

a second operation of performing interference CRS channel estimation based on the compensated interference signal;

a third operation of removing the interference signal from the reception signal based on the interference CRS channel estimation to obtain an updated reception signal;

a fourth operation of performing serving CRS channel estimation based on the updated reception signal;

a fifth operation of restoring the reception signal based on the serving CRS channel estimation to obtain a restored reception signal; and

sequentially repeating the first to fifth operations based on the restored reception signal.

**6.** The operating method of claim 2, wherein the removing the interference signal includes removing the interference signal by performing the third interference signal removing operation in response to determining that an absolute value of the residual frequency offset is less than a first threshold value and that an interference CRS collision does not exist, the third interference signal removing operation including:

compensating for the subcarrier offset based on the interference signal to obtain a compensated interference signal;
performing interference CRS channel estimation based on the compensated interference signal;
removing the interference signal from the reception signal based on the interference CRS channel estimation to obtain an updated reception signal; and
performing serving CRS channel estimation based on the updated reception signal.

**7.** The operating method of any preceding claim, wherein

the subcarrier offset is a maximum integer less than or equal to twice a normalized frequency offset, the normalized frequency offset being normalized at the SCS; and
the residual frequency offset is a value obtained by subtracting the subcarrier offset from the normalized frequency offset.

**8.** The operating method of any preceding claim, further comprising:

receiving bandwidth information of the interference cell from the BS,
the removing the interference signal includes removing an interference signal corresponding to a bandwidth of the interference cell based on the bandwidth information.

**9.** The operating method of claim 8, wherein the receiving of the bandwidth information includes receiving the bandwidth information through one of radio resource control (RRC) signaling, medium access control-control element (MAC-CE) signaling or downlink control indicator (DCI) signaling.

**10.** The operating method of any preceding claim, wherein the BS supports a non-terrestrial network.

**11.** A user equipment (UE) communicating with a base station (BS), the UE comprising:

a plurality of antennas configured to transmit and receive signals from the BS; and
processing circuitry configured to

calculate a frequency offset difference between a serving cell and an interference cell based on a first frequency offset for the serving cell and a second frequency offset for the interference cell, the frequency offset difference including a subcarrier offset and a residual frequency offset, the serving cell being provided by the BS, and the subcarrier offset being an integer multiple of a subcarrier spacing (SCS), and
perform an interference signal removing operation to remove an interference signal from a reception signal by compensating for the frequency offset difference based on the residual frequency offset, the interference signal being caused by the interference cell, and the reception signal being received by the UE.

**12.** The UE of claim 11, wherein

the interference signal removing operation comprises one of

a first interference signal removing operation of repeatedly compensating for the frequency offset difference,
a second interference signal removing operation of repeatedly compensating for the subcarrier offset, or
a third interference signal removing operation of compensating for the subcarrier offset only once; and

the processing circuitry is configured to:

determine whether an absolute value of the residual frequency offset is greater than or equal to a threshold value,

perform the first interference signal removing operation in response to determining the absolute value of the residual frequency offset is greater than or equal to the threshold value,

determine whether there is an interference cell-specific reference signal (CRS) collision to obtain a determination result in response to determining the absolute value of the residual frequency offset is less than the threshold value, the interference CRS collision occurring based on a CRS position of the interference cell overlapping a CRS position of the serving cell, and

perform the second interference signal removing operation or the third interference signal removing operation based on the determination result.

12. The UE of claim 11, wherein the processing circuitry is configured to:

perform the second interference signal removing operation in response to determining the interference CRS collision exists; and

perform the third interference signal removing operation in response to determining the interference CRS collision does not exist.

13. The UE of claim 12, wherein the processing circuitry is configured to set the threshold value based on one of a reference signal received power (RSRP), a received signal strength indicator (RSSI) or a signal to interference plus noise ratio (SINR).

14. The UE of any of claims 11 to 13, wherein

the subcarrier offset is a maximum integer less than or equal to twice a normalized frequency offset, the normalized frequency offset being normalized at the SCS; and

the residual frequency offset is a value obtained by subtracting the subcarrier offset from the normalized frequency offset.

15. The UE of any of claims 11 to 14, wherein the processing circuitry is configured to:

receive bandwidth information of the interference cell from the BS through one of radio resource control (RRC) signaling, medium access control-control element (MAC-CE) signaling or downlink control indicator (DCI) signaling; and

perform the interference signal removing operation corresponding to a bandwidth of the interference cell based on the bandwidth information.

# FIG. 1

EP 4 648 314 A1

# FIG. 2

RADIO FRAME (214)

SUBFRAME (205)

· · ·

SLOT (206)

RESOURCE ELEMENT (212)

$N_{BW}$ SUBCARRIERS (204)

$N_{RB}$ SUBCARRIERS (210)

RESOURCE BLOCK (208)

$N_{symb}$ OFDM SYMBOLS (202)

FREQUENCY

TIME

# FIG. 3

30

```
START
```

CALCULATE FREQUENCY OFFSET DIFFERENCE
INCLUDING SUBCARRIER OFFSET AND RESIDUAL
FREQUENCY OFFSET — S310

PERFORM INTERFERENCE SIGNAL REMOVING
OPERATION BASED ON RESIDUAL FREQUENCY OFFSET — S320

```
END
```

# FIG. 4

40

START

DETECT FIRST FREQUENCY OFFSET FOR SERVING CELL AND SECOND FREQUENCY OFFSET FOR INTERFERENCE CELL — S410

CALCULATE NORMALIZED FREQUENCY OFFSET BY NORMALIZING FREQUENCY OFFSET DIFFERENCE AT SCS — S420

CALCULATE RESIDUAL FREQUENCY OFFSET AND SUBCARRIER OFFSET BASED ON NORMALIZED FREQUENCY OFFSET — S430

S440 — ABSOLUTE VALUE OF RESIDUAL FREQUENCY OFFSET ≥ THRESHOLD VALUE ?

NO → S460 — INTERFERENCE CRS COLLISION ?

NO → S480 — PERFORM THIRD INTERFERENCE SIGNAL REMOVING OPERATION

YES → S450 — PERFORM FIRST INTERFERENCE SIGNAL REMOVING OPERATION

YES → S470 — PERFORM SECOND INTERFERENCE SIGNAL REMOVING OPERATION

END

EP 4 648 314 A1

# FIG. 5

<u>50</u>

```
START
```

↓

PERFORM FIRST OPERATION OF COMPENSATING
FOR FREQUENCY OFFSET DIFFERENCE BASED ON
INTERFERENCE SIGNAL CAUSED BY INTERFERENCE
CELL — S510

↓

PERFORM SECOND OPERATION OF PERFORMING
INTERFERENCE CRS CHANNEL ESTIMATION
BASED ON COMPENSATED INTERFERENCE SIGNAL — S520

↓

PERFORM THIRD OPERATION OF REMOVING
INTERFERENCE SIGNAL FROM RECEPTION SIGNAL
BY SERVING CELL, BASED ON INTERFERENCE
CRS CHANNEL ESTIMATION — S530

↓

PERFORM FOURTH OPERATION OF PERFORMING
SERVING CRS CHANNEL ESTIMATION BASED ON
RECEPTION SIGNAL FROM WHICH INTERFERENCE
SIGNAL HAS BEEN REMOVED — S540

↓

PERFORM A FIFTH OPERATION OF RESTORING
RECEPTION SIGNAL BY SERVING CELL,
BASED ON SERVING CRS CHANNEL ESTIMATION — S550

↓

SEQUENTIALLY REPEAT FIRST TO FIFTH OPERATIONS — S560

↓

```
END
```

**EP 4 648 314 A1**

# FIG. 6

60

START

PERFORM FIRST OPERATION OF COMPENSATING FOR SUBCARRIER OFFSET BASED ON INTERFERENCE SIGNAL CAUSED BY INTERFERENCE CELL — S610

PERFORM SECOND OPERATION OF PERFORMING INTERFERENCE CRS CHANNEL ESTIMATION BASED ON COMPENSATED INTERFERENCE SIGNAL — S620

PERFORM THIRD OPERATION OF REMOVING INTERFERENCE SIGNAL FROM RECEPTION SIGNAL, BASED ON INTERFERENCE CRS CHANNEL ESTIMATION — S630

PERFORM FOURTH OPERATION OF PERFORMING SERVING CRS CHANNEL ESTIMATION BASED ON RECEPTION SIGNAL FROM WHICH INTERFERENCE SIGNAL HAS BEEN REMOVED — S640

PERFORM FIFTH OPERATION OF RESTORING RECEPTION SIGNAL BY SERVING CELL, BASED ON SERVING CRS CHANNEL ESTIMATION — S650

SEQUENTIALLY REPEAT FIRST TO FIFTH OPERATIONS — S660

END

23

# FIG. 7

70

START

↓

COMPENSATE FOR SUBCARRIER OFFSET
BASED ON INTERFERENCE SIGNAL CAUSED BY
INTERFERENCE CELL — S710

↓

PERFORM INTERFERENCE CRS CHANNEL ESTIMATION
BASED ON COMPENSATED INTERFERENCE SIGNAL — S720

↓

REMOVE INTERFERENCE SIGNAL FROM RECEPTION
SIGNAL BY SERVING CELL, BASED ON
INTERFERENCE CRS CHANNEL ESTIMATION — S730

↓

PERFORM SERVING CRS CHANNEL ESTIMATION
BASED ON RECEPTION SIGNAL FROM WHICH
INTERFERENCE SIGNAL HAS BEEN REMOVED — S740

↓

END

# FIG. 8

80

110a

BS

140a

UE

SIGNAL BANDWIDTH INFORMATION OF
INTERFERENCE CELL

S810

S820

PERFORM INTERFERENCE SIGNAL
REMOVING OPERATION CORRESPONDING
TO BANDWIDTH OF INTERFERENCE CELL,
BASED ON BANDWIDTH INFORMATION

# FIG. 9

# FIG. 10

EP 4 648 314 A1

# FIG. 11

HOME GADGET — 2100

2120

HOME APPLIANCES

2200
ACCESS POINT

2250

2300

2400
SERVER

2140
ENTERTAINMENT

2160
VEHICLE

2000

## EUROPEAN SEARCH REPORT

**Application Number**

EP 25 17 5270

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 9 002 280 B2 (HSU STEVE H [US]; KHAN RAHEEL [US]; QUALCOMM INC [US]) 7 April 2015 (2015-04-07) | 1,2, 7-11,14, 15 | INV. H04J11/00 |
| A | * column 5, line 8 - line 37; figure 3 * | 3-6,12, 13 | |
| Y | RICCARDO TUNINATO ET AL: "A comprehensive study on the synchronization procedure in 5G NR with 3GPP-compliant link-level simulator", EURASIP JOURNAL ON WIRELESS COMMUNICATIONS AND NETWORKING, BIOMED CENTRAL LTD, LONDON, UK, vol. 2023, no. 1, 27 October 2023 (2023-10-27), pages 1-29, XP021326403, DOI: 10.1186/S13638-023-02317-5 | 1,2, 7-11,14, 15 | |
| A | * page 11, paragraph 3.3.2 - page 13 * | 3-6,12, 13 | |
| Y | LI WEI ET AL: "A cell specific reference signal interference cancellation scheme for LTE cellular access systems", 2015 IEEE INTERNATIONAL SYMPOSIUM ON BROADBAND MULTIMEDIA SYSTEMS AND BROADCASTING, IEEE, 17 June 2015 (2015-06-17), pages 1-6, XP033188504, DOI: 10.1109/BMSB.2015.7177212 [retrieved on 2015-08-04] | 8,9,15 | TECHNICAL FIELDS SEARCHED (IPC) H04J H04L |
| A | * paragraph [A.CFO/TOEstimation]; figures 2, 3 * * paragraph [B.InterferingCE] * | 3-6,12, 13 | |
| A | KR 102 108 080 B1 (SK TELECOM CO LTD [KR]; UNIV YONSEI IACF [KR]) 7 May 2020 (2020-05-07) * paragraph [0070] - paragraph [0091]; figure 9 * | 1-15 | |

The present search report has been drawn up for all claims

| Place of search | Date of completion of the search | Examiner |
|---|---|---|
| Munich | 27 September 2025 | Giglietto, Massimo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 17 5270

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2025

| Patent document cited in search report | | Publication date | Patent family member(s) | | Publication date |
|---|---|---|---|---|---|
| US 9002280 | B2 | 07-04-2015 | US | 2013184018 A1 | 18-07-2013 |
| | | | WO | 2013109620 A1 | 25-07-2013 |
| KR 102108080 | B1 | 07-05-2020 | NONE | | |

EPO FORM P0459

For more details about this annex : see Official Journal of the European Patent Office, No. 12/82